# EUROPÄISCHE PATENTSCHRIFT

(11) **EP 0 591 822 B1**
(45) Veröffentlichungstag und Bekanntmachung des Hinweises auf die Patenterteilung: **02.12.1998**
(21) Anmeldenummer: 93115675.6
(22) Anmeldetag: 29.09.1993
(51) Int. Cl.: D04H 3/07, B29C 67/00

(54) **Verfahren und Vorrichtung zum Legen von Fäden**
Process and apparatus for laying threads
Procédé et installation pour poser des fils

(30) Priorität: 09.10.1992 DE 4234083
(43) Veröffentlichungstag der Anmeldung: 13.04.1994
(73) Patentinhaber: COMTEX Textile Composites GmbH, D-42967 Solingen (DE)
(72) Erfinder: Rector, Horst-Dieter, D-52441 Linnich (DE)
(74) Vertreter: Eichler, Peter, Dipl.-Ing.

(56) Entgegenhaltungen:
- DE-A- 3 003 666
- DE-A- 3 819 199
- DE-B- 1 291 648
- GB-A- 2 017 580
- GB-A- 2 158 471

## Beschreibung

Die Erfindung betrifft ein Verfahren zum Legen von textilen Fäden zu einer Verstärkung oder Armierung für überwiegend aus Kunststoff bestehende faserverstärkte rotationssymmetrische Scheiben , insbesondere Schleif- oder Trennscheiben. Außerdem betrifft die Erfindung eine Vorrichtung zum Ausführen des Verfahrens.

Es ist bekannt (DE-A-1 291 648), Schleifscheiben mit einer Verstärkung oder Armierung aus Glasfaserfäden zu versehen. Die Fäden sind dabei sternförmig gelegt, wobei die Fäden um sich am Scheibenrand befindende Fixpunkte gelegt werden und zwischen diesen geradlinig frei verlaufen, so daß die Fadendichte vom äußeren Rand zum Zentrum der Schleifscheibe zunimmt. Damit ist keine kraftliniengerechte Lage der Fäden der Verstärkung oder Bewehrung bzw. Armierung gegeben. Um die Nabe bzw. die zentrale Öffnung der Schleifscheibe herum nimmt die Dichte der Verstärkungsfäden außerdem noch so stark zu, daß sich hier eine deutliche Verdickung der Bewehrung ergibt, die für die Herstellung von Schleifscheiben gleichförmiger Dicke ungünstig und daher unerwünscht ist.

Weiterhin sind Verfahren und Vorrichtungen bekannt (DE-A-30 03 666 und DE-A-38 19 199), bei denen, um eine Armierung oder Bewehrung der Schleifscheiben zu erhalten, die Fäden um endständige Fixpunkte gelegt werden. Hierbei werden die Fäden zwischen den endständigen Fixpunkten geradlinig geführt. Wiederum - ähnlich wie bei der DE-A-1 291 648 - nimmt die Fadendichte im Bereich der zentralen Öffnung der Schleifscheibe zu, so daß hier eine Verdickung der Bewehrung auftritt.

Bei den im Stand der Technik bekannten Verfahren bzw. Vorrichtungen ist nicht optimal, daß aufgrund der geradlinigen Führung der Fäden keine kraftliniengerechte Fadenanordnung gewährleistet ist und daß örtliche Verdickungen und damit Ungleichförmigkeiten des Fadengeleges im mittleren Bereich auftreten.

Der Erfindung liegt daher die Aufgabe zugrunde, als Verstärkung oder Armierung für rotationssymetrische Scheiben dienende Fäden so zu legen, daß eine kraftliniengerechte Fadenanordnung erreicht ist und übermäßige Fadenkonzentrationen, die zu örtlichen Verdickungen und damit Ungleichförmigkeiten des Fadengeleges führen, vermieden werden.

Diese Aufgabe wird erfindungsgemäß mit einem Verfahren der eingangs genannten Art gelöst, das die Merkmale des kennzeichnenden Teiles des Patentanspruches 1 aufweist. Außerdem wird diese Aufgabe mit einer Vorrichtung der eingangs genannten Art gelöst, die die kennzeichnenden Merkmale des Patentanspruches 6 aufweist. Vorteilhafte Ausgestaltungen der Erfindung sind Gegenstand der Unteransprüche.

Erfindungsgemäß wird jeder Faden auf einer kurvenförmigen Bahn kontinuierlich zugeführt und um innerhalb der kurvenförmigen Bahn angeordnete variable Fixpunkte wenigstens teilweise spiralförmig gelegt. Hierdurch ergibt sich über die Fläche eine kraftliniengerechte Fadenverteilung. Insbesondere erfolgt die Legung so, daß auch bei hoher Fadendichte an Kreuzungsstellen von Fäden stets nur zwei Fäden übereinander liegen, um übermäßige örtliche Verdickungen des Fadengeleges zu vermeiden. Daher hat das Fadengelege über die gesamte Fläche eine praktisch gleichförmige Dicke und eine günstige Fadendichte bzw. Fadenverteilung. Im Ergebnis werden die oben beschriebenen Nachteile vermieden.

Wenn die Fäden zu einer Verstärkung oder Armierung von Scheiben gelegt werden, werden diese erfindungsgemäß wenigstens teilweise spiralförmig gelegt, um eine kraftliniengerechte Verteilung der Fäden im Fadengelege zu erzielen und zu erreichen, daß an Kreuzungsstellen der Fäden stets nur zwei Fäden übereinander liegen.

Das Fadengelege kann dabei aus einem Faden oder auch aus mehreren gleichzeitig zugeführten Fäden hergestellt werden.

Vorzugsweise werden die Fäden auf eine Unterlage gelegt, die eine Vielzahl von hochstehenden Stiften aufweist, welche Umlenkstellen für die gelegten Fäden bilden. Diese Stifte sind zurückschiebbar angeordnet, so daß sie teilweise oder ganz in die Unterlage zurückgezogen oder zurückgeschoben werden können, um das Legen einfach durchführen und das Fertige und in sich verfestigte Fadengelege problemlos von der Unterlage entfernen und einer weiteren Verarbeitung zuführen zu können.

Die Stifte können mit Einzelantrieb oder zu mehreren oder insgesamt mit einem gemeinsamen Antrieb versehen sein. In den erstgenannten Fällen kann die Legung der einzelnen Fäden durch gesteuertes Ein- und Ausfahren einzelner Stifte oder Gruppen von Stiften bestimmt werden.

Die Fäden können gesteuert bewegt von einem Fadenführer zugeführt und auf die Unterlage in der gewünschten Weise um die jeweiligen Stifte gelegt werden. Dabei kann entweder der zum Ablegen der Fäden bestimmte Fadenführer über die Unterlage bewegt oder aber die Unterlage gegenüber einem feststehenden Fadenführer verstellt, beispielsweise gedreht, werden.

Als Fäden werden beispielsweise Faden-Prepregs benutzt.

Nachdem die Fäden auf der die Stifte aufweisenden Unterlage abgelegt sind, wird beispielsweise eine beheizbare Druckplatte über die Unterlage gefahren und auf dieselbe abgesenkt. Die Druckplatte kommt dabei mit den Stiften in Kontakt und drückt diese in die Unterlage hinein, bis die Druckplatte mit dem Fadengelege in Kontakt kommt. Das Fadengelege wird dabei zwischen der Unterlage und der Druckplatte verpreßt, so daß die Fäden an den Kreuzungsstellen in innigen Kontakt kommen und dadurch miteinander verbunden werden. Gleichzeitig werden von einer Schneidvorrichtung, die sich in der Druckplatte und/oder der Unterlage befinden kann, die Fadenenden abgetrennt.

Nach erfolgtem Verpressen und Abtrennen der Fadenenden fährt die Druckplatte in ihre Ausgangsposition zurück. Die Stifte werden nun vollständig in die Unterlage zurückgezogen, so daß die unter Längsspannung stehenden Fäden in die Bereiche der Stifte hineingezogen werden und somit ein erneutes Einfahren der Stifte in das Fadengelege verhindern. Daraufhin wird das verpreßte Fadengelege von der Unterlage abgehoben, indem die Stifte aus der Unterlage wieder in ihre Ausgangsposition zurückgefahren werden. Das verpreßte Fadengelege wird von den hochfahrenden Stiften angehoben und kann vom oberen Ende der Stifte zur weiteren Verarbeitung abgenommen werden.

Nach dem Verpressen bildet das Fadengelege einen eine gewisse Steifigkeit aufweisenden flachen Körper, der zur Verstärkung oder Armierung von Schleifscheiben oder Trennscheiben geeignet ist. Es lassen sich aber auch Armierungen für eine andere Kontur aufweisende Gegenstände, beispielsweise rechteckige Platten, legen.

Obwohl das Fadengelege aus einem einzigen Faden hergestellt werden kann, ist es auch möglich, das Fadengelege aus mehreren Einzelfäden zu bilden, die jeweils von einem eigenen Lieferwerk und einem eigenen Fadenführer herangeführt werden.

In der Zeichnung sind Ausführungsbeispiele der erfindungsgemäßen Vorrichtung zum Legen von Fäden zu einem kraftliniengerechten Fadengelege sowie der Ablauf des erfindungsgemäßen Verfahrens schematisch dargestellt, und zwar zeigt
- Fig. 1: eine schaubildliche Ansicht einer ersten Ausführungsform der Vorrichtung, bei der über einer hochstehende Stifte aufweisenden kreisförmigen Verlegeplatte ein Fadenführer in einer Ebene in zwei Richtungen gesteuert verfahren werden kann, um einen Faden nach einem vorgegebenen Muster auf die Verlegeplatte zwischen den hochstehenden Stiften oder um ausgewählte Stifte abzulegen,
- Fig. 2: eine schaubildliche Ansicht einer zweiten Ausführungsform der Vorrichtung, bei der ein Faden von einem feststehenden Fadenführer einer drehbar gelagerten, kreisscheibenförmigen Verlegeplatte mit über deren Oberfläche hochstehenden Stiften zugeführt wird.
- Fig. 3: eine schaubildiche Ansicht einer weiteren Ausführungsform der Vorrichtung, bei der vier Fäden von vier feststehenden Fadenführern einer kreisscheibenförmigen, drehbar gelagerten Verlegeplatte mit über deren Oberseite hochstehenden Stiften zugeführt werden,
- Fig. 4: eine Seitenansicht einer weiteren Ausführungsform der Vorrichtung, woraus zu erkennen ist, wie ein Faden von einem rotierenden Fadenführer um ausgewählte hochstehende Stifte einer feststehenden Verlegeplatte gelegt wird,
- Fig. 5: eine Draufsicht auf die Vorrichtung aus Fig. 4 und
- Fig. 6: ein Schema des Ablaufes des erfindungsgemäßen Verfahrens.

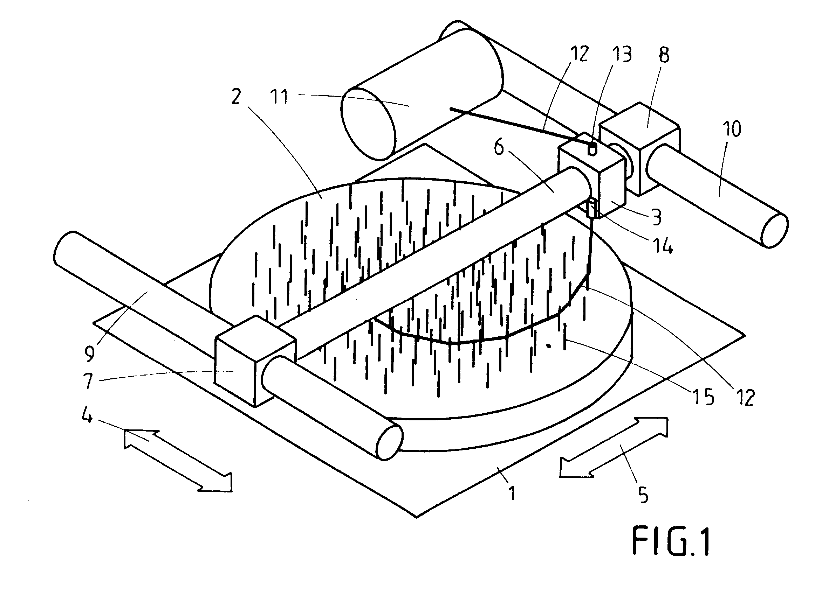

Die in Fig. 1 gezeigte Vorrichtung zum Legen eines Fadens (12) zu einem Fadengelege hat auf einem nicht näher dargestellten Grundgestell (1) eine feststehende, kreisscheibenförmige Verlegeplatte (2), über der ein Fadenführer (3) zweidimensional verstellbar gelagert ist, wie zwei Doppelpfeile (4) und (5) andeuten. Der Fadenführer (3) ist also sowohl entlang einer X-Achse als auch entlang einer Y-Achse verstellbar.

Der Fadenführer (3) ist zu diesem Zweck auf einer von einer Führungsstange gebildeten Traverse (6) geführt, die mit ihren Enden an Führungsblöcken (7) und (8) befestigt ist, welche jeweils auf einer rechtwinklig zur Traverse (6) verlaufenden Führungssäule (9) bzw. (10) in Richtung des Doppelpfeiles (4) verschiebbar geführt sind. Der für die Bewegungen vorgesehen Antrieb ist in Fig. 1 nicht dargestellt.

Von einer Vorlagespule (11) wird ein Faden (12) dem Fadenführer (3) zugeführt, der gemäß Fig. 1 eine Einlaufbuchse (13) und eine Auslaufbuchse (14) aufweist. Die Auslaufbuchse (14) lenkt den Faden (12) auf die Verlegeplatte (2), von der eine Vielzahl von Stiften (15) hochsteht, die als Umlenkstellen dienen, um die der Faden (12) gesteuert gelegt wird.

Die Bewegungen des Fadenführers (3) sind rechnergesteuert, oder mechanisch gesteuert, beispielsweise mittels eines Exzenters, so daß eine gewünschte Legung des Fadens (12) um ausgewählte Stifte (15) erfolgen kann. Die Stifte (15) sind gleichmäßig über die Oberfläche der Verlegeplatte (2) verteilt und können beispielsweise beliebig gesteuert eingesetzt werden.

Die Verlegung des Fadens (12) erfolgt, wie beispielsweise Fig. 1 erkennen läßt, wenigstens teilsweise spiralförmig, damit keine übermäßigen Verdickungen an Kreuzungsstellen des verlegten Fadens (2) entstehen können.

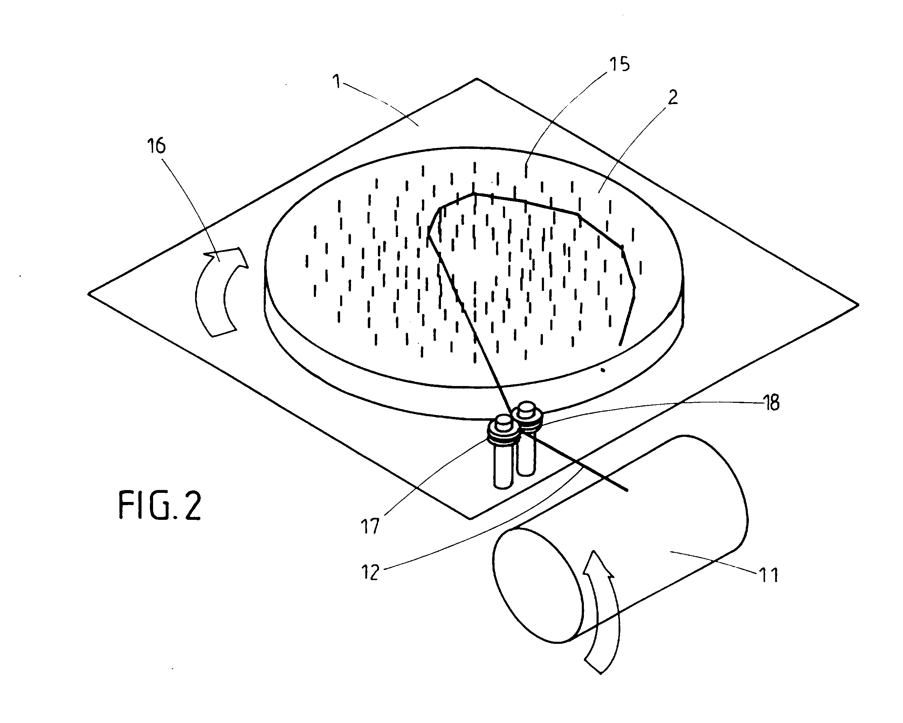

Die Ausführungsform gemäß Fig. 2 unterscheidet sich von der gemäß Fig. 1 im wesentlichen dadurch, daß die kreischeibenförmige Verlegeplatte (2) auf dem Grundgestell (1) drehbar gelagert ist, wie ein Pfeil (16) andeutet, und daß als Fadenführer auf dem Grundgestell (1) zwei miteinander zusammenwirkende Führungsrollen (17) und (18) gelagert sind, zwischen denen der von der Vorlagespule (11) zulaufende Faden (12) hindurchläuft. Bei dieser Ausführungsform ist dementsprechend der Fadenführer feststehend und die Verlegeplatte (2) relativ zu diesem beweglich, nämlich drehbar, angeordnet,

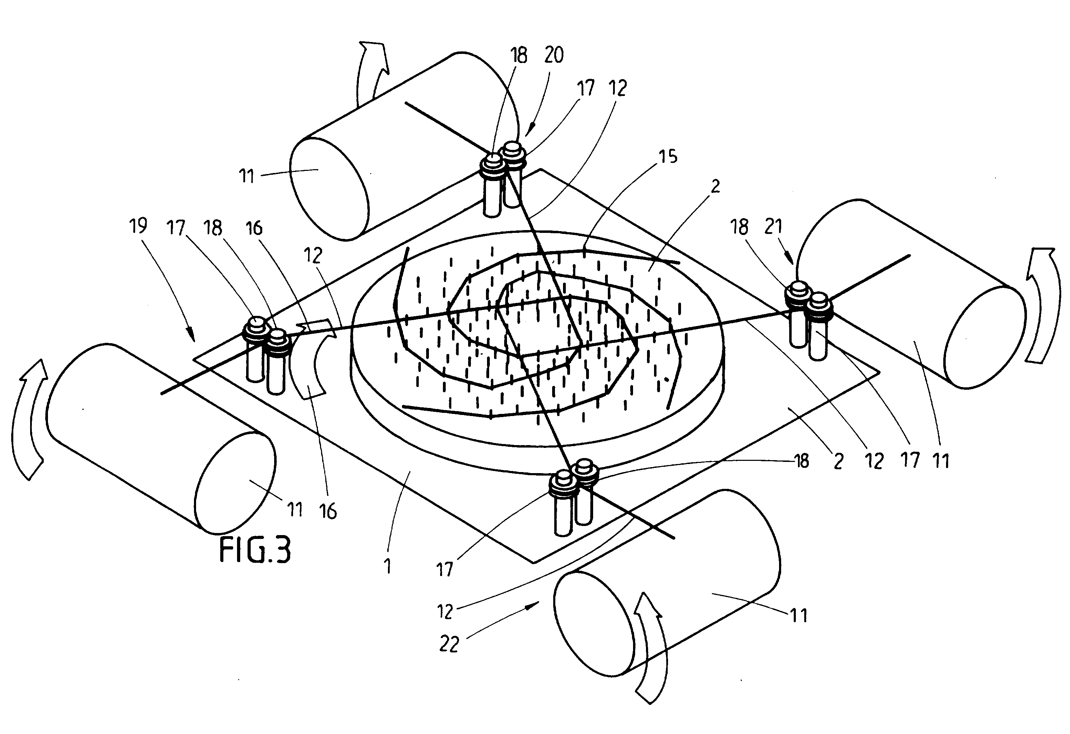

Bei der Ausführungsform gemäß Fig. 3 sind vier feststehende Fadenführer (19), (20), (21) und (22) vorgesehen. Ansonsten ist diese Vorrichtung ebenso wie die in Fig. 2 gezeigte ausgebildet.

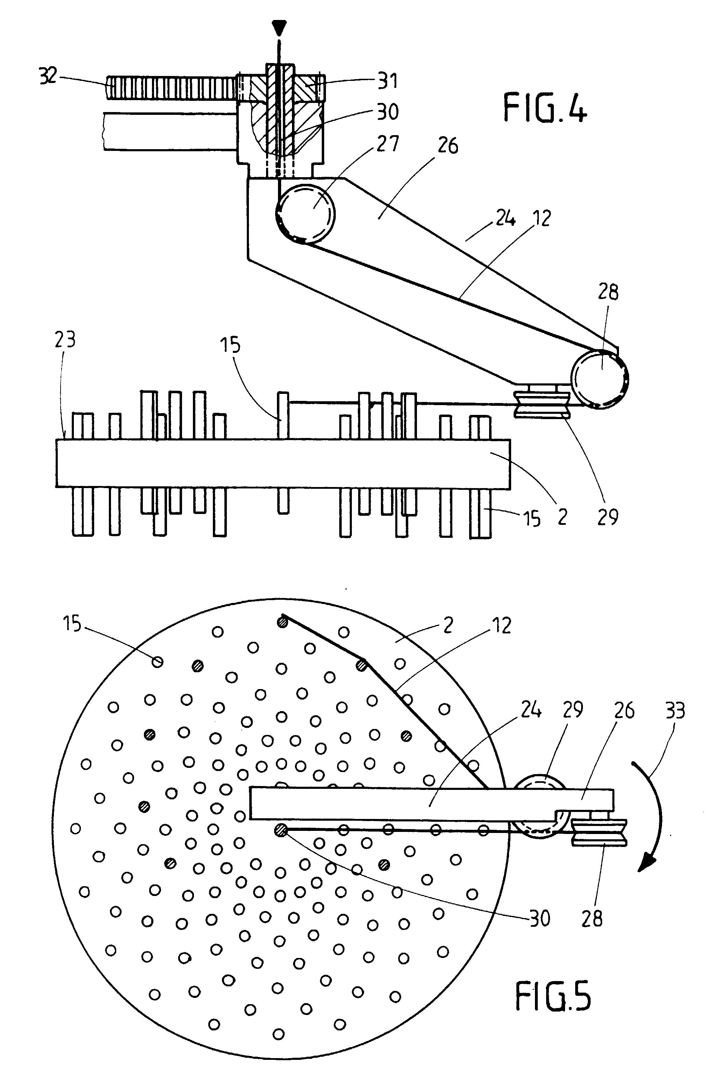

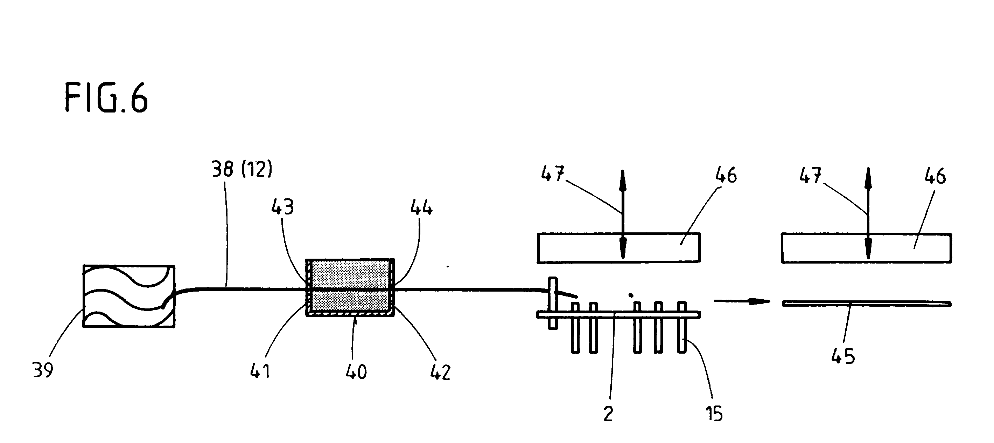

Aus Fig. 4 ist erkennbar, daß die an der Verlegeplatte (2) vorgesehenen Stifte (15) in nicht näher dargestellter Weise unterschiedlich weit über die Oberseite (23) der Verlegeplatte (2) hochgefahren werden können, so daß ein von einem Fadenführer (24) zugeführter Faden (12) um ausgewählte Stifte (15) gelegt werden kann, die in Fig. 5 schraffiert dargestellt sind. Die Stifte (15) werden gesteuert, je nach der gewünschten Verlegungskonfiguration, aus der Verlegeplatte (2) ausgefahren, damit der Faden (12) nur um die am weitesten ausgefahrenen Stifte gelegt wird. Ist der Faden um die am weitesten hochstehenden Stifte gelegt worden, können diese Stifte gesteuert in die teilweise zurückgezogene Position zurückgefahren werden, wobei sie den um sie liegenden Faden mitnehmen, um ihn auf das auf der Vorrichtung bereits befindliche, in der Zeichnung nicht näher dargestellte Fadengelege abzulegen.

Die Mitnahme der um die am weitesten hochstehenden Stifte (15) geführten Fäden (12) kann dadurch begünstigt werden, daß die Stifte (15) am oberen Ende mit einer hier nicht dargestellten Erweiterung oder ringförmigen Vertiefung versehen sind.

Auch bei dieser Art der Fadenlegung erfolgt das Verpressen des Fadengeleges und das Auswerfen des verpreßten Fadengeleges ähnlich in Verbindung mit Fig. 1 beschrieben.

Fig. 4 läßt erkennen, daß alle Stifte (15) gleiche Länge aufweisen, so daß deren nach unten überstehende Länge der über die Oberseite (23) überstehenden Länge umgekehrt proportional ist. Zur Steuerung der Position der einzelnen Stifte (15) kann unter der Verlegeplatte (2) eine entsprechende Steuereinrichtung, beispielsweise eine Nockensteuerung, angeordnet sein, welche die Stifte (15) einzeln und/oder gruppenweise verstellt.

Bei der Ausführungsform gemäß Fig. 4 und 5 hat der Fadenführer (24) einen Auslegerarm (26) mit daran gelagerten Umlenkrollen (27) und (28) und einer Leitrolle (29), über die der zulaufende Faden (12) geführt ist. Der Ausleger (26) ist an einer Fadenführung (30) befestigt, die mit einem Ritzel (31) versehen ist, das mit einem feststehenden Zahnkranz (32) kämmt, so daß der Auslegerarm (26) gemäß einem in Fig. 5 gezeigten Pfeil (33) bewegt bzw. gedreht werden kann, um über der feststehenden Verlegeplatte (2) zu kreisen und dabei den Faden (12) in der gewünschten Weise zu legen.

Obwohl in Fig. 1 der Fadenführer (3) mit feststehender Einlaufbuchse (13) und Auslaufbuchse (14) gezeigt ist, kann der in Draufsicht gemäß der X-Achse und gemäß der Y-Achse, also praktisch in einer Ebene zweidimensional, gesteuert bewegbare Fadenführer auch mit Umlenkrollen für die Fadenführung versehen sein, ähnlich wie in Fig. 4 und 5 dargestellt. Auf diese Weise ist es möglich, den Faden (12) mit kurzer Legelänge um ausgewählte einzelne Stifte (15) oder um Gruppen von Stiften legen und den gelegten Faden dann auf die Verlegeplatte (2) ziehen zu können, nämlich indem der Fadenführer über der Verlegeplatte die von den ausgewählten Stiften vorgegebene Kontur abfährt.

Soll der Faden (12) mit der Vorrichtung gemäß Fig. 1 um einzelne oder gruppenweise ausgewählte Stifte (15) gelegt werden, ist es zweckmäßig, die Stifte (15) einzeln oder gruppenweise in die Verlegeposition ausfahren zu können, damit jeder Faden mittels Umlenkrollen, wie in Fig. 4 und 5 gezeigt, zugeführt werden kann, ohne durch nicht zu benutzende hochstehende Stifte behindert werden zu können.

In jedem Falle ist es so, daß die unterste Kante bzw. das unterste Ende der zum Verlegen eines Fadens (12) vorgesehenen untersten Leitrolle (29) über dem obersten Ende der teilweise zurückgezogenen Stifte (15) liegt, wie in Fig. 4 angedeutet. Daher kann der Legekopf bzw. dessen Leitrolle (29) die für die Fadenlegung gewünschte Kurve gesteuert abfahren und den Faden (12) mit möglichst kurzer freier Länge verlegen, ohne mit den teilweise angefahrenen Stiften (15) zu kollidieren.

Gemäß Figur 6 wird von einer Vorlagespule 39 ein aus einem Glasfaserroving bestehender Faden 38 abgezogen und einem Behälter 40 zugeführt, der mit einer Harzschmelze gefüllt ist und in seinen Stirnwänden 41 und 42 je eine Öffnung 43 bzw. 44 enthält, durch die der Faden 38 hindurchtreten kann.

Der Faden 38 kann ein zunächst unbehandeltes Glasfaserroving sein. In diesem Falle wird der Faden 38 im Behälter 40 mit einem Reaktionsharz und einem Reaktionsmittel, einem Härter, getränkt, bevor er der Verlegeplatte 2 zugeführt und dort um die senkrecht verschiebbaren Stifte 15 gelegt wird.

Der von der Vorlagespule 39 ablaufende Faden 38, der dem Faden 12 gemäß Fig. 1 bis 5 entspricht, kann bereits von vornherein ein Glasfaserroving mit eingelagerten Reaktionsmitteln, das heißt mit eingelagertem Härter, sein. In diesem Falle braucht im Behälter 40 lediglich geschmolzenes Reaktionsharz enthalten sein, um den Faden 38 für die Verlegung in gewünschter Weise vorzubehandeln.

Mit anderen Worten besteht der Faden 38 aus einem Glasfaserroving, dem thermoplastisches Material zugegeben wird, bevor er an die Verlegestelle gelangt.

Auf der Verlegeplatte 2 wird der Faden um die senkrecht bewegbaren Stifte 15 in der oben beschriebenen Weise gelegt, damit eine Ronde 45 aus einem oder mehreren Fäden entsteht. Diese Ronde ist nach dem Verlegen noch nicht ausreichend stabil. Vielmehr ist vorgesehen, diese zum endgültigen Stabilisieren warm zu verpressen, wozu beispielsweise, wie in Fig. 6 links gezeigt, oberhalb der Verlegeplatte 2 eine erwärmte Preßplatte 46 angeordnet ist, die gemäß einem Doppelpfeil 47 abgesenkt und wieder angehoben werden kann. Beim Absenken auf die Verlegeplatte 2 drückt die Preßplatte 14 die Stifte 15 in die Verlegeplatte 2, bis sie mit dem auf der Verlegeplatte 2 befindlichen Roving 45 in Kontakt kommt und diesen unter Druck setzt.

In Fig. 6 ist rechts aber auch gezeigt, daß die erwärmte Preßplatte 46 neben der Verlegeplatte 2 angeordnet sein kann, so daß die gelegte Ronde 45 erst nach dem Abwerfen von der Verlegeplatte 2 warm gepreßt und dabei endgültig stabilisiert wird.

Bei der Warmverpressung werden die die Ronde 45 bildenden Fäden 38 bzw. 12 an ihren Kreuzungsstellen dauerhaft miteinander verbunden, weil das dem Glasfaserroving beigegebene thermoplastische Material erweicht und nach dem Zurückfahren der Verpreßplatte 46 so erkaltet, daß eine nicht ohne weiteres lösbare Verbindung zwischen den einzelnen Fadenlagen an ihren Kreuzungsstellen verbleibt.

## Patentansprüche

1. Verfahren zum Legen von textilen Fäden (12) zu einer Verstärkung oder Armierung für überwiegend aus Kunststoff bestehende faserverstärkte rotationssymetrische Scheiben, insbesondere Schleif- oder Trennscheiben, **dadurch gekennzeichnet**, daß jeder Faden (12) auf einer kurvenförmigen Bahn kontinuierlich zugeführt und um innerhalb der kurvenförmigen Bahn angeordnete variable Fixpunkte (15) wenigstens teilweise spiralförmig gelegt wird.

2. Verfahren nach Anspruch 1, dadurch gekennzeichnet, daß die Fäden (12) von einer Spule abgezogen, sodann mit einem Reaktionsharz versehen und danach zu einer Ronde gelegt werden.

3. Verfahren nach Anspruch 2, dadurch gekennzeichnet, daß die Fäden (12) aus einem Glasfaserroving bestehen, wobei den Fäden vor oder bei dem Versehen mit Reaktionsharz als Härter dienendes Reaktionsmittel wie Reaktionsharz zugegeben wird.

4. Verfahren nach Anspruch 2 oder 3, dadurch gekennzeichnet, daß die Fäden (12) vor dem Verlegen durch eine Schmelze aus thermoplastischem Reaktionsharz hindurchgezogen werden.

5. Verfahren nach einem der Ansprüche 2 bis 4, dadurch gekennzeichnet, daß die aus den Fäden (12) gelegte Ronde warmgepreßt wird.

6. Vorrichtung zum Ausführen des Verfahrens nach einem der Ansprüche 1 bis 5, mit einer Grundplatte, die wahlweise konfigurierbare Stifte aufweist, **dadurch gekennzeichnet,** daß die Stifte (15) wahlweise oder gesteuert aus- und einfahrbaren sind und daß die Fäden (12) um die Stifte, mittels einer Relativbewegung zwischen Grundplatte (2) und einem Fadenführer (3; 19 bis 22; 24) steuerbar spiralförmig beliebig wählbarer Anordnung oder Konfiguration zu legen sind.

7. Vorrichtung nach Anspruch 6, dadurch gekennzeichnet, daß die Stifte (15) einzeln oder gruppenweise steuerbar in oder an der Grundplatte (2) gelagert sind.

8. Vorrichtung nach Anspruch 6 oder 7, dadurch gekennzeichnet, daß die Stifte (15) mit unterhiedlichen Längen über die Oberseite (23) der Grundplatte (2) überstehend einstellbar sind.

9. Vorrichtung nach einem der Ansprüche 6 bis 8, dadurch gekennzeichnet, daß die Stifte (15) nahe ihrem oberen oder äußeren Ende mit einer Einkehlung und/oder einer Erweiterung versehen sind.

10. Vorrichtung nach einem der Ansprüche 6 bis 9, dadurch gekennzeichnet, daß der Fadenfährer (24) einen über der Grundplatte (2) kreisend bewegbar gelagerten Auslegearm (26) aufweist, der die gesamte Grundfläche der Grundplatte überstreicht.

11. Vorrichtung nach Anspruch 10, dadurch gekennzeichnet, daß der Fadenführer (3; 24) wenigstens eine Leitrolle (27, 28, 29) für den zulaufenden Faden (12) aufweist, die höher als die teilweise zurückgezogenen Stifte (15) über der Grundplatte (2) bewegbar ist.

12. Vorrichtung nach einem der Ansprüche 6 bis 11, dadurch gekennzeichnet, daß neben der drehbar gelagerten Grundplatte (2) wenigstens ein feststehender Fadenführer (19 bis 22) angeordnet ist.

13. Vorrichtung nach einem der Ansprüche 6 bis 12, dadurch gekennzeichnet, daß sie zum Zuführen der Fäden (12) eine wechselbare Vorlegespule sowie einen Badbehälter für eine Harzschmelze aufweist und daß eine beheizte Preßplatte zum Warmverpressen der aus den Fäden gelegten Ronden vorgesehen ist.

## Claims

1. Method of laying textile threads (12) in order to strengthen or reinforce fibre-reinforced rotationally symmetrical discs, in particular grinding discs or cutting-off wheels, made substantially of synthetic material, characterised in that each thread (12) is supplied continuously on a curve-shaped sheet and is laid in a spiral-like manner at least partially about variable fixing points (15) which are disposed within the curveshaped sheet.

2. Method according to claim 1, characterised in that the threads (12) are drawn off from a spool, then provided with a reaction resin and subsequently are laid in such a manner as to form a round.

3. Method according to claim 2, characterised in that the threads (12) consist of a glass fibre roving, wherein a reactant, such as reaction resin, which serves as a hardener is added to the threads prior to or during the process of providing the reaction resin.

4. Method according to claim 2 or 3, characterised in that the threads (12) are drawn through a melt of thermoplastic reaction resin prior to the laying process.

5. Method according to any of claims 2 to 4, characterised in that the round formed by laying the threads (12) is warm-pressed.

6. Device for implementing the method according to any one of claims 1 to 5, comprising a base plate which comprises pins which can be configured as desired, characterised in that the pins (15) can be moved outwards or inwards optionally or in a controlled manner and that the threads (12) are to be laid in a controllable manner in any optional spiral-shaped arrangement or configuration about the pins by means of a relative movement between the base plate (2) and a thread guide (3; 19 to 22; 24).

7. Device according to claim 6, characterised in that the pins (15) are mounted individually or in groups in a controllable manner in or on the base plate (2).

8. Device according to claim 6 or 7, characterised in that the pins (15) can be adjusted with different lengths protruding beyond the upper side (23) of the base plate (2).

9. Device according to any one of claims 6 to 8, characterised in that the pins (15) are provided in the proximity of their upper or outer end with a necking region and/or a region which widens.

10. Device according to any one of claims 6 to 9, characterised in that the thread guide (24) comprises a deflecting arm (26) which is mounted in such a manner as to be able to perform a circular movement over the base plate (2) and which deflecting arm covers the entire base face of the base plate.

11. Device according to claim 10, characterised in that the thread guide (3; 24) comprises at least one guide roller (27, 28, 29) for the incoming thread (12), which guide roller can be moved over the base plate (2) at a height greater than the partially pulled-back pins (15).

12. Device according to any one of claims 6 to 11, characterised in that at least one fixed thread guide (19 to 22) is disposed next to the rotatably mounted base plate (2).

13. Device according to any one of claims 6 to 12, characterised in that said device comprises for the purpose of supplying the threads (12) a replaceable feed spool and a bath container for a resin melt and that a heated pressing plate is provided for the purpose of warm-press processing the rounds formed by laying threads.

## Revendications

1. Procédé pour poser des fils textiles (12) en vue de renforcer ou d'armer des disques symétriques en rotation renforcés par fibres qui sont composés principalement de matière plastique, en particulier des meules, caractérisé en ce que chaque fil (12) est amené en continu sur une trajectoire courbe et posé au moins partiellement en spirale autour de points fixes variables (15) disposés à l'intérieur de la trajectoire courbe.

2. Procédé selon la revendication 1, caractérisé en ce que les fils (12) sont déroulés d'une bobine puis sont garnis d'une résine de réaction et sont ensuite posés pour former un rond.

3. Procédé selon la revendication 2, caractérisé en ce que les fils (12) se composent d'un stratifil de fibres de verre, étant précisé qu'on ajoute aux fils, avant ou pendant leur garnissage avec de la résine de réaction, un agent de réaction qui sert de durcisseur, comme de la résine de réaction.

4. Procédé selon la revendication 2 ou 3, caractérisé en ce que les fils (12), avant la pose, traversent une masse fondue de résine de réaction thermoplastique.

5. Procédé selon l'une des revendications 2 à 4, caractérisé en ce que le rond formé à partir des fils (12) est pressé à chaud.

6. Dispositif pour la mise en oeuvre du procédé selon l'une des revendications 1 à 5, comportant une plaque de base qui présente des tiges aptes à être configurées au choix, caractérisé en ce que les tiges (15) sont aptes à être déployées et rétractées au choix ou de façon commandée, et en ce que les fils (12) doivent être posés autour des tiges suivant n'importe quelle disposition ou configuration en spirale apte à être choisie, en pouvant être guidés grâce à un mouvement relatif entre la plaque de base (2) et un guide-fil (3 ; 19 à 22 ; 24).

7. Dispositif selon la revendication 6, caractérisé en ce que les tiges (15) sont montées dans ou sur la plaque de base (2) en étant aptes à être commandées individuellement ou par groupes.

8. Dispositif selon la revendication 6 ou 7, caractérisé en ce que les tiges (15) sont réglables en saillie suivant différentes longueurs sur le côté supérieur (23) de la plaque de base (2).

9. Dispositif selon l'une des revendications 6 à 8, caractérisé en ce que les tiges (15 )sont pourvues, près de leur extrémité supérieure ou extérieure, d'une cannelure et/ou d'un élargissement.

10. Dispositif selon l'une des revendications 6 à 9, caractérisé en ce que le guide-fil (24) comporte un bras (26) qui est monté mobile en rotation au-dessus de la plaque de base (2) et qui balaie toute la surface de base de celle-ci.

11. Dispositif selon la revendication 10, caractérisé en ce que le guide-fil (3 ; 24) comporte au moins un rouleau de guidage (27, 28, 29) pour le fil entrant (12), lequel rouleau de guidage est apte à se déplacer plus haut que les tiges (15) partiellement rétractées, au-dessus de la plaque de base (2).

12. Dispositif selon l'une des revendications 6 à 11, caractérisé en ce qu'au moins un guide-fil fixe (19 à 22) est disposé près de la plaque de base (2) montée en rotation.

13. Dispositif selon l'une des revendications 6 à 12, caractérisé en ce qu'il comporte, pour amener les fils (12), une bobine de présentation échangeable ainsi qu'un récipient pour bain pour une résine fondue, et en ce qu'il est prévu une plaque de pression chauffée pour presser à chaud les ronds formés à partir des fils.
